# FASCICULE DE BREVET EUROPEEN

(11) **EP 0 910 519 B1**
(45) Date de publication et mention de la délivrance du brevet: **03.05.2000**
(21) Numéro de dépôt: 97931884.7
(22) Date de dépôt: 07.07.1997
(51) Int. Cl.: B60Q 3/04

(54) **Dispositif indicateur pour véhicules automobiles**
Anzeigevorrichtung für Kraftfahrzeuge
Indicator for motor vehicles

(30) Priorité: 09.07.1996 FR 9608517
(43) Date de publication de la demande: 28.04.1999
(73) Titulaire: MAGNETI MARELLI FRANCE, 92000 Nanterre (FR)
(72) Inventeur: CASTELLANI, Andréa, I-200136 MILAN (IT); DORLEANS, Jacques, F-93140 Bondy (FR)
(74) Mandataire: Texier, Christian
(86) Numéro de dépôt international: FR9701218
(87) Numéro de publication internationale: WO9801319

(56) Documents cités:
- EP-A- 0 664 237
- DE-A- 4 227 579

## Description

La présente invention concerne le domaine des dispositifs indicateurs pour véhicules automobiles (cf. par exemple EP-A-0 664 237, correspondant au préambule de la revendication indépendante).

Elle s'applique notamment mais non exclusivement à la réalisation de tableaux de bord.

On a déjà proposé de nombreuses structures de tableaux de bord pour véhicules automobiles.

Le plus souvent, ces tableaux de bord comprennent un boîtier qui loge des systèmes indicateurs, par exemple à aiguille ou encore statiques type LCD, et des moyens d'éclairage. Le boîtier est fermé sur son contour d'ouverture, en face avant, par une vitre transparente ou translucide.

De tels boîtiers de tableaux de bord ont fait l'objet de nombreuses variantes de réalisation. Ils peuvent être formés par assemblage de différentes pièces. Généralement, la partie du boîtier adjacente à la vitre avant est dénommée "réhaut" dans la mesure où cette partie a pour but de réhausser le boîtier par rapport aux systèmes indicateurs, c'est-à-dire d'imposer une distance entre la vitre avant et lesdits systèmes indicateurs.

Cette partie du boîtier dénommée réhaut adjacente à la vitre avant est généralement opaque pour éviter des fuites de lumière sur l'extérieur du tableau de bord.

On a déjà proposé de nombreuses techniques d'assemblage pour fixer la vitre avant sur le réhaut du tableau de bord.

Ainsi, il a été proposé des systèmes d'assemblage par encliquetage ou encore par collage à l'aide de colles polymérisables par application d'un rayonnement UV.

Les techniques d'assemblage par colle UV donnent satisfaction avec des vitres avant transparentes.

Néanmoins, de nos jours, il est souhaité, pour certains tableaux de bord, de disposer d'une vitre avant munie d'un cordon périphérique opaque, le plus souvent noir, pour des questions de style et afin d'éviter efficacement toute fuite de lumière au niveau de la jonction entre la vitre avant et le boîtier.

En raison de la présence d'un tel cordon périphérique noir, l'utilisation de colle UV ne peut plus être envisagée puisque le rayonnement UV nécessaire à la polymérisation de la colle ne peut plus être appliqué à travers la vitre avant.

Par conséquent, pour ce type de tableaux de bord, seuls les systèmes d'assemblage par encliquetage pouvaient être envisagés jusqu'ici.

La présente invention a maintenant pour but de perfectionner les dispositifs indicateurs, notamment les tableaux de bord connus.

Ce but est atteint selon la présente invention grâce à un dispositif indicateur du type comprenant un boîtier et une vitre avant transparente ou translucide, la vitre possèdant des bossages sur la périphérie de sa face arrière, et la périphérie du réhaut du boîtier comprenant des logements complémentaires aptes à recevoir les bossages et caractérisé par le fait que la fixation de la vitre avant sur le réhaut est assurée par collage à l'aide d'une colle sensible à un rayonnement et application de ce rayonnement de polymérisation par l'arrière de la vitre.

D'autres caractéristiques, buts et avantages de l'invention apparaîtront à la lecture de la description détaillée qui va suivre, et en regard des dessins annexés, donnés à titre d'exemple non limitatif et sur lesquels :
- la figure 1 représente une vue partielle arrière de la périphérie d'un tableau de bord conforme à la présente invention,
- la figure 2 représente une vue partielle en coupe transversale conforme au plan de coupe référencée II-II sur la figure 1, et
- la figure 3 représente une vue en coupe périphérique conforme au plan de coupe référencée III-III sur la figure 2.

On a illustré sur les figures annexées des vues partielles d'un tableau de bord conforme à la présente invention, plus précisément de la périphérie de celui-ci.

La structure générale du tableau de bord comprenant boîtier, vitre, systèmes indicateurs (à aiguille ou statiques) et les moyens d'éclairage, peut être classique en elle-même et ne sera donc pas décrite dans le détail par la suite.

On distingue sur les figures annexées, la périphérie d'une vitre avant 10 transparente ou translucide et d'un réhaut 20 de boîtier. On aperçoit sur les figures annexées un revêtement ou cordon d'impression opaque 12, par exemple de couleur noire disposé sur toute la périphérie de la vitre 10. En raison de la présence de ce cordon 12, la périphérie de la vitre avant 10 n'est pas transparente à la lumière.

Le cordon 12 est prévu sur la face avant de la périphérie de la vitre 10.

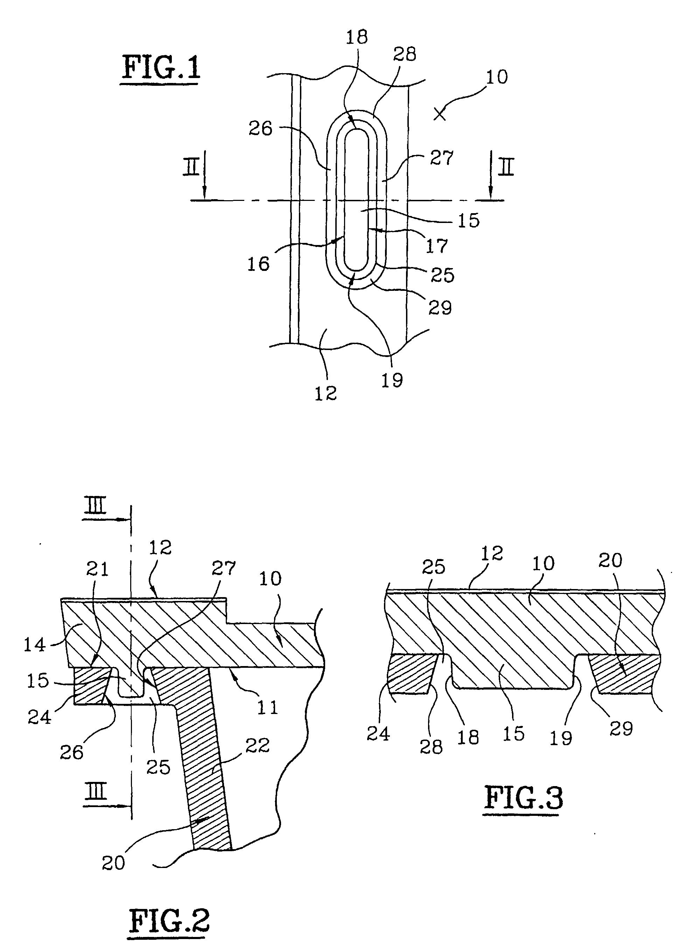

Comme on le voit sur la figure 2, le cordon 12 peut être prévu de préférence, mais non limitativement, sur une surépaisseur 14 prévue sur le pourtour de la vitre 10.

Le réhaut 20 comprend une paroi périphérique 22 sensiblement orthogonale à la vitre avant 10. Plus précisément, selon le mode de réalisation non limitatif illustré sur la figure 2, cette paroi 22 est inclinée par rapport à la vitre 10 pour être divergente en direction du contour d'ouverture du boîtier. La paroi 20 est munie sur son extrémité avant d'une bordure 24, par exemple plane, parallèle à la périphérie de la vitre 10. La bordure 24 fait saillie sur la périphérie extérieure du bord avant de la paroi 22.

Comme on l'a explicité précédemment, le réhaut 20 comprenant la paroi 22 et la bordure 24 est de préférence réalisé en un matériau opaque, ou encore en un matériau revêtu d'un matériau opaque pour éviter toute fuite de lumière vers l'extérieur du tableau de bord.

Dans le cadre de la présente invention, il est prévu sur la périphérie de la vitre avant 10 et sur la surface arrière 11 de celle-ci des plots 15 conçus pour pénétrer dans des logements 25 réalisés dans la bordure 24 du réhaut.

De préférence, mais non limitativement, les plots 15 et logements 25 sont oblongues, leur grande longueur étant orientée selon la direction périphérique du tableau de bord.

Plus précisément encore, selon le mode de réalisation illustré sur les figures annexées, chaque plot 15 est délimité par deux parois principales planes parallèles 16, 17 et deux surfaces d'extrémité 18, 19, en forme de demi-cylindre. Comme on le voit sur les figures 2 et 3, le sommet des plots 15 ainsi que leur base, c'est-à-dire leur zone de liaison avec la vitre 10 sont de préférence arrondis.

Comme indiqué précédemment, les logements 25 ont une forme généralement complémentaire des plots 15, c'est-à-dire de préférence oblongue.

Selon le mode de réalisation des figures annexées, les logements 25 sont délimités par deux parois principales 26, 27 planes mais non parallèles, divergentes vers l'arrière du boîtier et deux surfaces d'extrémité 28, 29 en forme de demi-tronc de cône.

Une fois la vitre 10 accolée contre la face avant 21 de la bordure 24, et les plots 15 introduits dans les logements 25 correspondant, une colle sensible à un rayonnement, de préférence sensible à un rayonnement UV, est disposée dans les logements 25 et la colle est insolée par l'arrière.

Grâce à la présence des logements 25, l'homme de l'art comprendra aisément que le rayonnement UV parvient sans difficulté sur la colle pour assurer la polymérisation de celle-ci malgré la nature opaque de la bordure 24 du réhaut et la présence du cordon noir 12 sur la face avant de la vitre 10.

De nombreux types de colle peuvent être utilisés pour fixer la vitre avant sur le réhaut.

Les inventeurs ont obtenu des résultats pleinement satisfaisants avec des colles type TB30F155, TB30F173 et TB30F174 commercialisées par la Société THREE BOND EUROPE S.A.

Ladite vitre 10 peut être réalisée en polyméthylméthacrylate tandis que le réhaut 20 est réalisé en poly(styrène/butadiène/acrylonitrile) plus couramment appelé ABS. Cependant, l'invention n'est pas limitée à ces matériaux particuliers.

Par ailleurs, concernant les dimensions de certains éléments du dispositif indicateur de la présente invention, de préférence :
- la vitre 10 possède une épaisseur de l'ordre de 2,5mm au niveau de sa surépaisseur 14 de périphérie,
- la bordure 24 possède une épaisseur de l'ordre de 2mm,
- les plots 15 possèdent une largeur de l'ordre de 1,5mm et une longueur de l'ordre de 5mm,
- le jeu minimal défini entre les plots 15 et les logements 25 est de l'ordre de 0,5mm dans le sens de la largeur des plots et de 0,9mm dans le sens de la longueur des plots.

Bien entendu la présence invention n'est pas limitée au mode de réalisation particulier qui vient d'être décrit.

En particulier, l'invention n'est pas limitée à la réalisation de tableaux de bord comme indiqué précédemment, mais s'applique à tout dispositif indicateur utilisable sur véhicules automobiles, notamment aux montres électroniques ou aux ordinateurs de bord.

## Revendications

1. Dispositif indicateur pour véhicules automobiles du type comprenant un boîtier (20) et une vitre avant (10) transparente ou translucide, la vitre (10) possèdant des bossages (15) sur la périphérie de sa face arrière (11), et la périphérie (24) du réhaut (22) du boîtier (20) comprenant des logements (25) aptes à recevoir les bossages (15), caractérisé par le fait que la fixation de la vitre (10) sur le réhaut (20) est assurée par collage à l'aide d'une colle sensible à un rayonnement de polymérisation et application de ce rayonnement de polymérisation par l'arrière de la vitre (10).

2. Dispositif selon la revendication 1, caractérisé par le fait que la colle est une colle sensible aux rayonnements ultra-violets.

3. Dispositif selon l'une des revendications 1 ou 2, caractérisé par le fait que la vitre (10) est munie d'un cordon opaque (12) sur sa périphérie et le réhaut (20) du boîtier est optiquement opaque.

4. Dispositif selon l'une des revendications 1 à 3, caractérisé par le fait que les logements (25) sont formés dans une bordure (24) du réhaut (20) parallèle à la vitre (10).

5. Dispositif selon l'une des revendications 1 à 4, caractérisé par le fait que les plots (15) et logements (25) sont de forme oblongue.

6. Dispositif selon l'une des revendications 1 à 5, caractérisé par le fait que chaque plot (15) est délimité par deux parois principales planes parallèles entre elles (16, 17) et deux parois d'extrémité (18, 19) en forme de secteur de cylindrique.

7. Dispositif selon l'une des revendications 1 à 6, caractérisé par le fait que le sommet et la base des plots (15) sont arrondis.

8. Dispositif selon l'une des revendications 1 à 7, caractérisé par le fait que les logements (25) sont délimités par deux parois principales (26, 27) planes divergentes et deux surfaces d'extrémité (28, 29) en forme de demi-tronc de cône.

9. Dispositif selon l'une des revendications 1 à 8, caractérisé par le fait que chaque plot (15) a une largeur de l'ordre de 1,5mm et une longueur de l'ordre de 5mm.

10. Dispositif selon l'une des revendications 1 à 9, caractérisé par le fait que le jeu minimal entre chaque plot (15) et le logement (25) correspondant est de l'ordre de 0,5mm.

11. Dispositif selon l'une des revendications 1 à 10, caractérisé par le fait qu'il constitue un tableau de bord pour véhicules automobiles.

## Patentansprüche

1. Anzeigevorrichtung für Kraftfahrzeuge einer Art, die ein Gehäuse (20) und eine transparente oder lichtdurchlässige vordere Glasscheibe (10) aufweist, wobei die Glasscheibe (10) auf der Peripherie ihrer Rückseite (11) Nabenwulste (15) aufweist, und die Peripherie (24) des Aufsatzes (22) des Gehäuses (20) mit Lagern (25) versehen ist, in welche die Nabenwulste (15) eingesetzt werden können,
**dadurch gekennzeichnet, daß**
die Befestigung der Glasscheibe (10) an dem Aufsatz (20) durch Verklebung mit Hilfe eines für eine Strahlenbehandlung für die Polymerisierung empfindlichen Klebers durchgeführt wird, wobei die Strahlen für die Polymerisierung an der Rückseite der Glasscheibe (10) aufgebracht werden.

2. Anzeigevorrichtung nach Anspruch 1,
**dadurch gekennzeichnet, daß**
der Kleber ein für UV-Strahlen empfänglicher Kleber ist.

3. Anzeigevorrichtung nach Anspruch 1 oder 2,
**dadurch gekennzeichnet, daß**
die Glasscheibe (10) an ihrer Peripherie mit einem lichtundurchlässigen Wulst (12) versehen und der Aufsatz (20) des Gehäuses optisch undurchlässig ist.

4. Anzeigevorrichtung nach einem der Ansprüche 1 bis 3,
**dadurch gekennzeichnet, daß**
die Lager (25) in einer Umrandung (24) des Aufsatzes (20) parallel zu der Glasscheibe (10) vorgesehen sind.

5. Anzeigevorrichtung nach einem der Ansprüche 1 bis 4,
**dadurch gekennzeichnet, daß**
die Nabenwulste (15) und die Lager (25) eine längliche Form haben.

6. Anzeigevorrichtung nach einem der Ansprüche 1 bis 5,
**dadurch gekennzeichnet, daß**
die einzelnen Nabenwulste (15) durch zwei untereinander parallel verlaufende flache Hauptwände (16, 17) und zwei Endwände (18, 19) in Form von zylindrischen Sektoren begrenzt werden.

7. Anzeigevorrichtung nach einem der Ansprüche 1 bis 6,
**dadurch gekennzeichnet, daß**
die Spitze und die Basis der Nabenwulste (15) abgerundet sind.

8. Anzeigevorrichtung nach einem der Ansprüche 1 bis 7,
**dadurch gekennzeichnet, daß**
die Lager (25) von zwei divergierenden flachen Hauptwänden (16, 27) und zwei Endflächen (28, 29) eingegrenzt werden, welche die Form eines stumpfen Halbkegels haben.

9. Anzeigevorrichtung nach einem der Ansprüche 1 bis 8,
**dadurch gekennzeichnet, daß**
die einzelnen Nabenwulste (15) eine Breite in der Größenordnung von 1,5 mm und eine Länge in der Größenordnung von 5 mm haben.

10. Anzeigevorrichtung nach einem der Ansprüche 1 bis 9,
**dadurch gekennzeichnet, daß**
das minimale Spiel zwischen den Nabenwulsten (15) und den entsprechenden Lagern (25) in der Größenordnung von 0,5 mm liegt.

11. Anzeigevorrichtung nach einem der Ansprüche 1 bis 10,
**dadurch gekennzeichnet, daß**
sie ein Armaturenbrett für ein Kraftfahrzeug bildet.

## Claims

1. Indicator device for motor vehicles, of the type comprising a casing (20) and a transparent or translucent front window (10), the window (10) having bosses (15) on the periphery of its rear face (11), and the periphery (24) of the upstand (22) of the casing (20) comprising housings (25) capable of housing the bosses (15), characterized in that the window (10) is secured to the upstand (20) by adhesive bonding using an adhesive that is sensitive to polymerizing radiation and by applying this polymerizing radiation from the rear of the window (10).

2. Device according to Claim 1, characterized in that the adhesive is an adhesive which is sensitive to ultraviolet radiation.

3. Device according to one of Claims 1 and 2, characterized in that the window (10) has an opaque edging (12) around its periphery and the upstand (20) of the casing is optically opaque.

4. Device according to one of Claims 1 to 3, characterized in that the housings (25) are formed in a border (24) of the upstand (20) parallel to the window (10).

5. Device according to one of Claims 1 to 4, characterized in that the lumps (15) and the housings (25) are of oblong shape.

6. Device according to one of Claims 1 to 5, characterized in that each lump (15) is delimited by two main walls (16, 17) which are flat and mutually parallel and two end walls (18, 19) in the shape of sectors of cylinders.

7. Device according to one of Claims 1 to 6, characterized in that the top and bottom of the lumps (15) are rounded.

8. Device according to one of Claims 1 to 7, characterized in that the housings (25) are delimited by two main walls (26, 27) which are flat and diverge and two end surfaces (28, 29) in the shape of half-cone-frustums.

9. Device according to one of Claims 1 to 8, characterized in that each lump (15) is of the order of 1.5 mm wide and of the order of 5 mm long.

10. Device according to one of Claims 1 to 9, characterized in that the minimal clearance between each lump (15) and the corresponding housing (25) is of the order of 0.5 mm.

11. Device according to one of Claims 1 to 10, characterized in that it constitutes an instrument panel for motor vehicles.
